# EUROPEAN PATENT SPECIFICATION

(11) **EP 4 260 025 B1**
(45) Date of publication and mention of the grant of the patent: **27.11.2024**
(21) Application number: 21839259.5
(22) Date of filing: 10.12.2021
(51) Int. Cl.: G01G 21/30, G06Q 10/08, G06Q 10/0833, G06Q 50/02

(54) **SEALED SENSOR ASSEMBLY FOR AN EQUIPMENT FOR AIDING TRACEABILITY OF AGRI-FOOD PRODUCTS**
ABGEDICHTETE SENSORANORDNUNG FÜR EINE AUSRÜSTUNG ZUR UNTERSTÜTZUNG DER VERFOLGBARKEIT VON AGRARNAHRUNGSMITTELN
ENSEMBLE CAPTEUR SCELLÉ POUR ÉQUIPEMENT D'ASSISTANCE DE TRAÇABILITÉ DE PRODUITS AGRO-ALIMENTAIRES

(30) Priority: 11.12.2020 IT 202000030602
(43) Date of publication of application: 18.10.2023
(73) Proprietor: SISSPRE - SOCIETA' ITALIANA SISTEMI E SERVIZI DI PRECISIONE S.R.L., 20122 Milano (IT)
(72) Inventor: POLO FILISAN, Andrea, 20122 Milano (IT); SCALISE, Fabio Mario, 20122 Milano (IT)
(74) Representative: Studio Torta S.p.A.
(86) International application number: PCT/IB2021/061577
(87) International publication number: WO 2022/123524

(56) References cited:
- EP-A1- 0 035 579
- WO-A1-2020/136618
- GB-A- 2 513 136

## Description

### TECHNICAL FIELD

The present invention relates to a sealed sensor assembly for an equipment for aiding traceability of agri-food products.

### BACKGROUND ART

As is known, traceability of products along the chain is becoming increasingly important in the agri-food sector. On the one hand, in fact, in many countries traceability is imposed by regulations governing hygiene and food safety and, on the other hand, it is especially interest of the companies that produce high-quality products to be able to ensure the public in the best way possible of the origin of raw materials and the nature of the processing carried out, as well as the integrity up to the commercialization. Therefore, essentially, there is the need to reduce the room for possible frauds carried out by replacing or adding raw materials having a different provenance from the one declared, everything also for the fundamental protection of the final consumer paying attention to quality.

Therefore, numerous solutions have been developed that have the aim to help the certification of the provenance and of the processing of the commercialized products. Generally, however, exactly the initial steps of the traceability chain of agricultural products, i.e. the collection and the transportation toward the processing site, have elements of weakness that make the certification difficult and still leave wide margins for fraud attempts. This is particularly true, for example, for the collection of fruits of any type and for many types of vegetables. The difficulties arise from the obvious lack of technological infrastructure at the collection sites, that currently prevents from carrying out operations necessary for the certification of the product.

In addition to the protection against frauds, it is also important to trace and document also the preservation conditions of the raw materials. Frequently, in fact, agri-food products are especially sensitive to temperature and to humidity and the organoleptic properties can deteriorate in an unrepairable manner if the preservation conditions are not suitable. Also the squashing due to the use of collection and/or storage containers that are too big can be a problem. Moreover, it is advisable to note that, even more than in storehouses, where the environmental conditions can be controlled, the risk of damage due to bad preservation is greater exactly at the collection sites and during transportation. Often, for example, the containers used for the collection remain exposed for a long time under the sun after being filled, because at the collection sites there is a lack of sufficiently spacious shaded areas.

The available sensors do not allow, though, combining in a satisfactory manner different needs, which not infrequently are in conflict. For example, especially with regard to the weight sensors, it is necessary to ensure not only precision and flexibility of use in extremely variable environmental conditions, but also compliance with sanitary or disciplinary regulations which are often very strict. Consider the use of said sensors during the collection of products in different seasons or in hill or mountain territories with differences of height sometimes of hundreds of meters and with the consequent variations of temperature and pressure. The need to seal the sensors in order to prevent contaminations of the products (but also damage to said sensors) may not allow keeping an acceptable level of reliability in very different environmental conditions.

WO 2020/136618 A1 discloses a sensor assembly for an equipment for aiding traceability of agri-food products comprising a first plate, a second plate, facing the first plate, and a first chamber defined between the first plate and the second plate. A load cell is housed in the first chamber and coupled to the first plate and to the second plate so as to be responsive to a load applied on the second plate.

### DISCLOSURE OF INVENTION

The object of the present invention is to provide a sensor assembly that allows overcoming or at least mitigating the described limitations.

According to the present invention, a sensor assembly for an equipment for aiding traceability of agri-food products is therefore provided substantially as defined in claim 1.

### BRIEF DESCRIPTION OF THE DRAWINGS

Further characteristics and advantages of the present invention will be evident from the following description of non-limiting example embodiments, with reference to the figures of the accompanying drawings, wherein:
- Figure 1 is a perspective view of an equipment for aiding traceability of agri-food products;
- Figure 2 is a side view of the equipment of Figure 1;
- Figure 3 is a simplified block scheme of the equipment of Figure 1;

- Figure 4 shows the equipment of Figure 1 in use;
- Figure 5 is a top plan view of a sensor assembly in accordance with an embodiment of the present invention, used in the equipment of Figure 1;
- Figure 6A is a front view of the sensor assembly of Figure 5;
- Figure 6B is a partial front view of the sensor assembly of Figure 5, enlarged and sectioned along the plane of track VIB-VIB of Figure 5, in a first operating configuration;
- Figure 6C shows the view of Figure 5, with the sensor assembly in a second operating configuration;
- Figure 6D is a side view of the sensor assembly of Figure 5 enlarged and sectioned along the plane of track VID-VID of Figure 6B, in the first operating configuration;
- Figure 6E shows the side view of Figure 6D, with the sensor assembly in the second operating configuration;
- Figure 7 is a simplified block scheme of the sensor assembly of Figure 5;
- Figures 8 and 9 respectively show a first and a second variant of a detail of the sensor assembly of Figure 5;
- Figures 10 and 11 respectively show a first and a second variant of a further detail of the sensor assembly of Figure 5;
- Figure 12 is a graph that illustrates quantities relative to the sensor assembly of Figure 5; and
- Figure 13 is a simplified side view of a different equipment for aiding traceability of agri-food products, using a sensor assembly in accordance with an embodiment of the present invention.

### BEST MODE FOR CARRYING OUT THE INVENTION

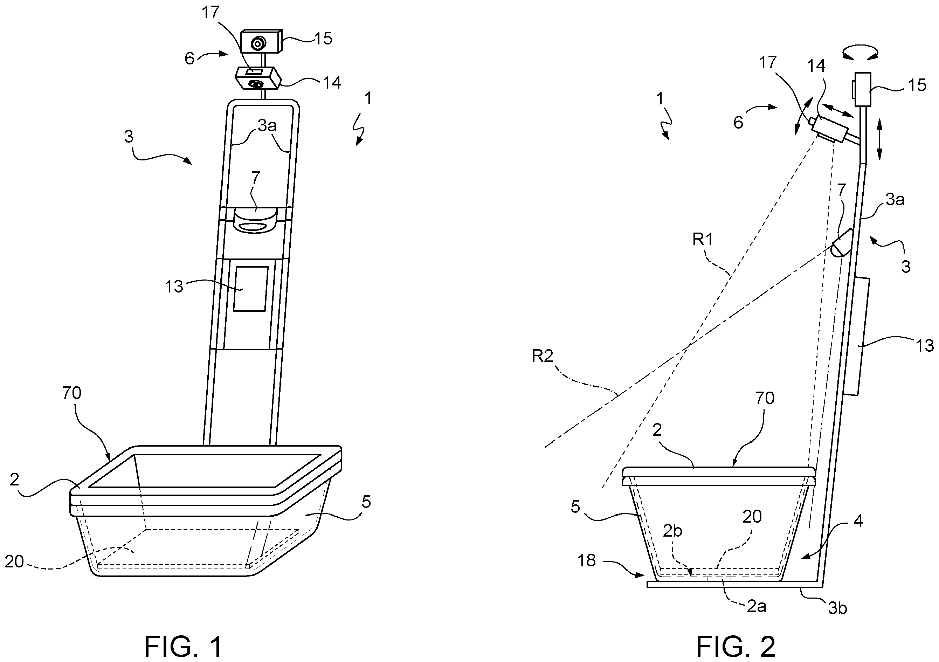

With reference to Figures 1 and 2, an equipment for aiding traceability of agri-food products is indicated, as a whole, by reference numeral 1. The equipment 1 is specially intended to support traceability in the collection step of fruits and vegetables of any type.

The equipment 1 comprises a container 2 for the collection of fruits and a frame 3, provided with connecting members 4 for the connection to the container 2.

The container 2 may be any container generally open at the top and usable for the collection of fruits or vegetables. In the example of Figure 1, the container 2 is a crate stackable with other crates of the same type (generally suitable to contain several kilos of product and thus easily transportable by hand). Alternatively, the container 2 may be a standard bin suitable to contain larger quantities of product and movable through mechanical forks. In an embodiment, the container 2 is provided with an identification tag 2a, that contains a unique identification code and may be of electromagnetic reading type (for example an RFID or NFC tag).

In an embodiment, the frame 3 comprises a vertical support 3a defined by one or more uprights fixed to the connecting members 4, which are configured in particular to allow reversibly connecting the frame 3 to the container 2. In the embodiment of Figure 1, in particular, the connecting members 4 comprise a base 5 designed to receive the container 2 and fixed to a ground resting portion 3b of the frame 3. The base 5, in particular, may be defined by a stackable crate identical to the container 2. In this manner, the coupling between the frame 3 and the container 2 is simple and quick and, furthermore, the positioning of the container 2 is accurate and repeatable. In an embodiment not shown, the base may be planar, for example with a substantially horizontal plate for the resting of the container 2. Alternatively, the connecting members may comprise vices, clamps or clutch or screw fixing systems and the like.

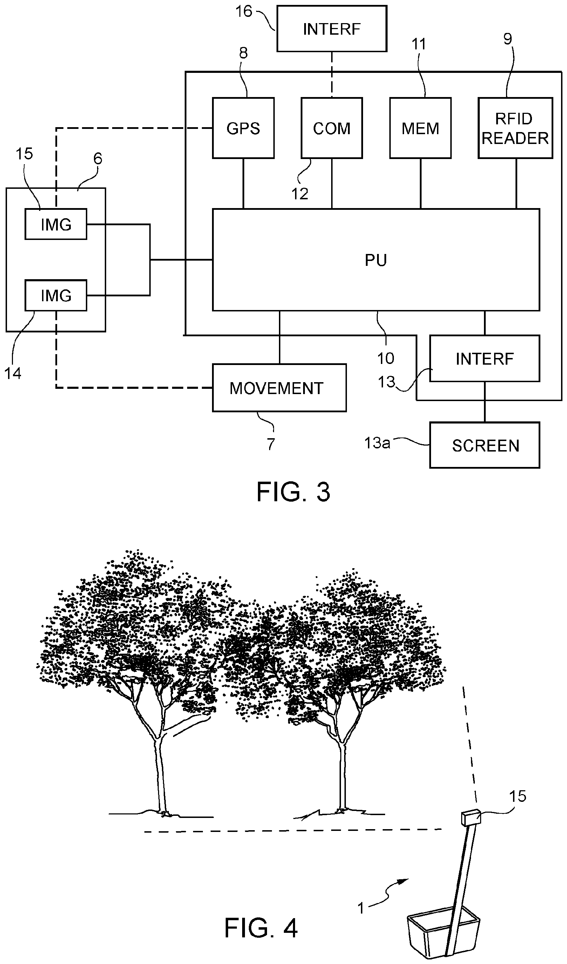

With reference also to Figure 3, the equipment 1 further comprises an image detecting device 6, a movement sensor 7, a satellite localization device 8, an identification tag reader 9, a processing unit 10 provided with a storage device 11, and a wireless communication module 12, which, in a non-limiting embodiment, are all mounted on the frame 3. A local control interface 13 is provided with a screen 13a and may be supported by the frame 3 and connected via cable to the processing unit 10 or may be defined by a mobile device, such as a smartphone or a tablet and communicably coupled to the processing unit 10 through the wireless communication module 12, for example by using the standard Bluetooth communication. Alternatively, a remote interface 16 may be communicably coupled to the processing unit 10 for the same purpose through the wireless communication module 12. At least the satellite localization device 8, the identification tag reader 9, the processing unit 10, the storage device 11, the wireless communication module 12 and the control interface 13 may be housed inside a same case fixed to the frame 3. In an alternative embodiment, the functions of the satellite localization device 8, of the identification tag reader 9, of the processing unit and of the storage device 11 may be integrated in a mobile device (smartphone or tablet).

In an embodiment, the image detecting device 6, comprises image sensors 14, 15, provided with respective fixed or variable optics not shown, and an illuminator 17.

The image sensors 14, 15 may essentially be sensors in the visible band, such as CMOS or CCD sensors, or infrared or ultraviolet radiation sensors, laser scanners or, generally, of any type suitable to be mounted on the frame 3.

The image sensor 14 is oriented toward the base 5 so as to frame an observed region R1 including the mouth of the container 2 when the latter is placed in the base 5, as is shown in Figure 2. The image sensor 14 is configured to acquire single images and/or image sequences for a planned period of time on the basis of the type of activity to be observed and traced in response to movements detected by the movement sensor 7 and to remain in a standby condition in the absence of signals indicative of movements detected by the movement sensor 7. The coupling to the movement sensor 7 may be direct or indirect through the processing unit 10 (Figure 3). In other words, the image sensor 14 may be directly responsive to signals coming from the movement sensor 7 or to commands generated by the processing unit 10 in turn in response to signals coming from the movement sensor 7. In an embodiment, the image acquisition is carried out with a lag, for example of several seconds, with respect to the instants in which the movement sensor 7 detects a movement or the last of a sequence of movements in its sensible range.

The image sensor 15 is oriented so as to take panoramic images of a portion of the ground around the equipment 1 where the collection is carried out, in particular of trees from which fruits are collected, besides installations, fences, portions of premises and any present objects (Figure 4). The image sensor 15 may be manually activated through commands provided by an operator through the control interface 13 or in response to a change of spatial coordinates indicated by the satellite localization device 8 (for example, following shifts beyond a minimum planned distance).

In an alternative embodiment not shown, it is possible to use a single image sensor orientable both toward the base 5, and toward the surrounding area and/or variable optics that allow manually or automatically commuting between the different frames on the basis of a preset mode.

The movement sensor 7 may be, for example, a passive infrared sensor, a DMT ("Digital Motion Technology") sensor, a microwave sensor, an ultrasound sensor or combinations thereof. The movement sensor 7 is oriented toward the base 5 for detecting movements in a surveillance region R2 including at least a portion of the observed region R1 framed by the image detecting device 6. In particular, the movement sensor 7 is configured to be activated by the insertion of the container 2 in the base 5 and by transfer operations into the container 2 already in the base 5 of collected fruits. Essentially, therefore, the movement sensor 7 allows identifying the introduction of the container 2, empty or full, in the base 5 and the actions that imply a variation of the content of the container 2 when the latter is in the base 5.

Furthermore, as mentioned, the movement sensor 7 determines, directly or indirectly through the processing unit 10, the acquisition of images by the image sensor 14.

The satellite localization device 8 is, for example, a GPS localizer or a GNSS navigator and is communicably coupled to the processing unit 10 for providing, in response to a command, a pair of spatial coordinates (longitude and latitude).

The identification tag reader 9 is of a type suitable to read the identification tags 2a indicated on the container 2. Depending on the identification tags 2a used, the identification tag reader 9 may comprise, for example, an RFID reader.

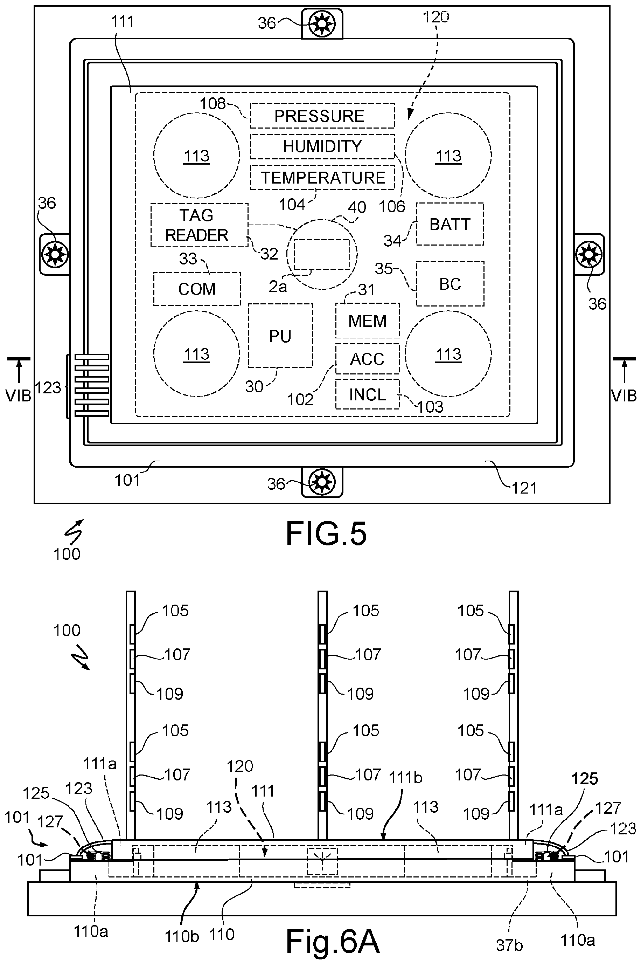

With reference to Figures 5-7, the equipment 1 is further provided with a sensor assembly 100, configured to be removably coupled to the container 2. More precisely, the container 2 and the sensor assembly 100 placed inside the container 2 define a tool 70 for aiding traceability usable in the equipment 1.

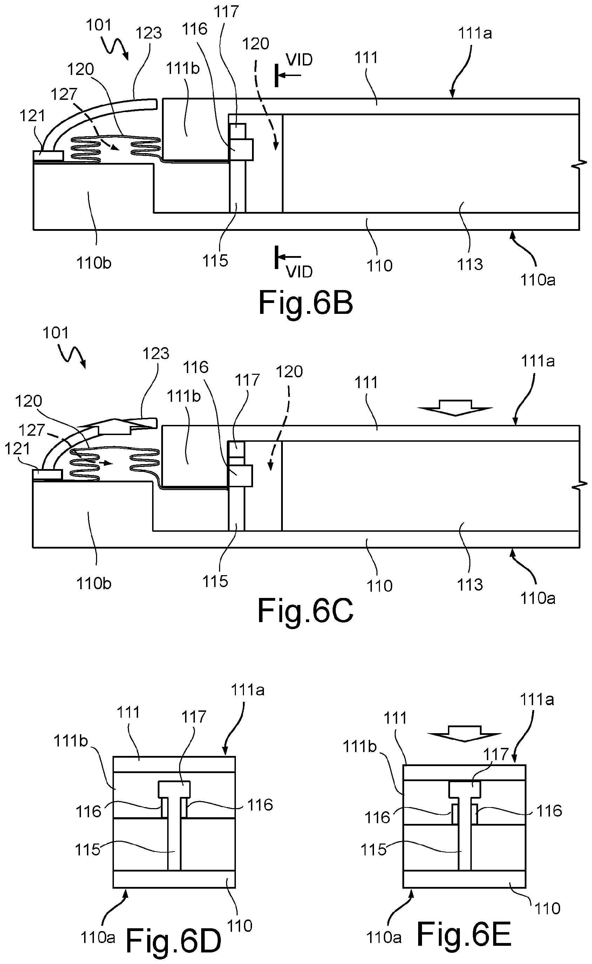

The sensor assembly 100 (Figures 5 and 6A) comprises a weighing device 101 and a plurality of sensors, among which for example an accelerometer 102, an inclinometer 103, an internal temperature sensor 104, external temperature sensors 105, an internal humidity sensor 106, external humidity sensors 107, a pressure sensor 108 and pH-meters 109. Furthermore, the sensor assembly comprises an on-board processing unit 30, a storage module 31, an identification tag reader 32, a communication module 33, a battery 34 and a recharging device 35.

The weighing device 101 defines a case of the sensor assembly 100 and has a width and a length much greater than the thickness and plan for example quadrangular, with a main first face 101a and a main second face 101b opposite each other. The weighing device 101 is removably fixed to the bottom wall 2b of the container 2 by fixing elements 36, such as tamper-resistant screws or, in embodiments not shown, biadhesive strips, release elements and the like. Alternatively, if the container 2 is provided with aeration holes, the fixing may be obtained by clips. In use, the first face 101a faces the bottom wall 2b of the container 2.

The weighing device 101 comprises a base plate 110, a load plate 111 and one or more load cells 113, that may be manufactured with any available technology. The base plate 110 and the load plate 111 are made of a dielectric material and are sufficiently rigid to bear the maximum load allowed inside the container 2 without appreciably deforming. The base plate 110 has a face 110a fixed to the bottom wall 2b of the container 2, whereas the load plate 111 has a face 111a opposite the face 110a of the base plate 110 and facing toward the inside of the container 2. The faces 110a, 111a of the base plate 110 and of the load plate 111 are flat and parallel to each other. The base plate 110 has a perimetral frame 110b that projects toward the load plate 111. Similarly, the load plate 111 has a perimetral frame 111b that projects toward the base plate 110. Furthermore, the base plate 110 has such dimensions as to receive the load plate 110 slidably and with play inside a recess defined by the perimetral frame 110b.

Specifically, the load plate 111 is constrained to slide relative to the base plate 110 exclusively in a direction perpendicular to the face 111a of the load plate 111, for example by a coupling to linear guide and cursor, as is shown in the example of Figures 6A-6E. In this case, linear guides 115 are fixed to the base plate 110 and extend perpendicular to the face 110a in direction of the load plate 111 and are received between pairs of pins 116 made on an internal lateral surface of the perimetral frame 111b of the load plate 111. The linear guides 115, for example T-shaped, also define stopping elements 117 that prevent the load plate 111 from separating from the base plate 110. It is understood that the slidable coupling between the base plate 110 and the load plate 111 may be obtained by any other suitable device.

Thanks to the perimetral frames 110b, 111b and to the recesses defined thereby, a sensor chamber 120 is defined between the base plate 110 and the load plate 111 (see in particular Figures 6B-6D).

The load cells 113 are arranged in the sensor chamber 120 between the base plate 110 and the load plate 111 so as to be responsive to the loads on the face 111a of the load plate 111 and on the face 110 of the base plate 110. Essentially, when the base plate 110 rests on the ground (in particular inside the container 2) and a load is applied to the face 111b of the load plate 111, the load plate 111 stresses the load cells 113.

The sensor chamber 120 further houses the accelerometer 102, the inclinometer 103, the internal temperature sensor 104, the internal humidity sensor 106, the pressure sensor 108, the on-board processing unit 30, the storage module 31, the identification tag reader 32, the communication module 33, the battery 34 and the recharging device 35.

An impermeable membrane 125 made of yielding material, for example a silicone sheath, seals the space between the base plate 110 and the load plate 111. More precisely, the membrane 125 is fluid-tight coupled to the perimetral frame 110b of the base plate 110 and to the perimetral frame 111b of the load plate 111 along the whole perimeter thereof and delimits a sealed closed space containing the sensor chamber 120. For example, the membrane 125 may be comolded or glued to the perimetral frame 111b of the load plate 111 and sealingly fixed to the perimetral frame 110b of the base plate 110 by a fixing frame 121. In an embodiment, the fixing frame 121 may be removably applied by screws or release fixings not shown for favoring the execution of maintenance interventions inside the sensor chamber 120 or for the replacement of the membrane 125. The fixing frame 121 is provided with a protective structure 123 (in Figure 6A shown only in part) for the membrane 125. The protective structure 123 is defined by a plurality of arched teeth, that extend comb-like toward the load plate 111 so as to form a cage.

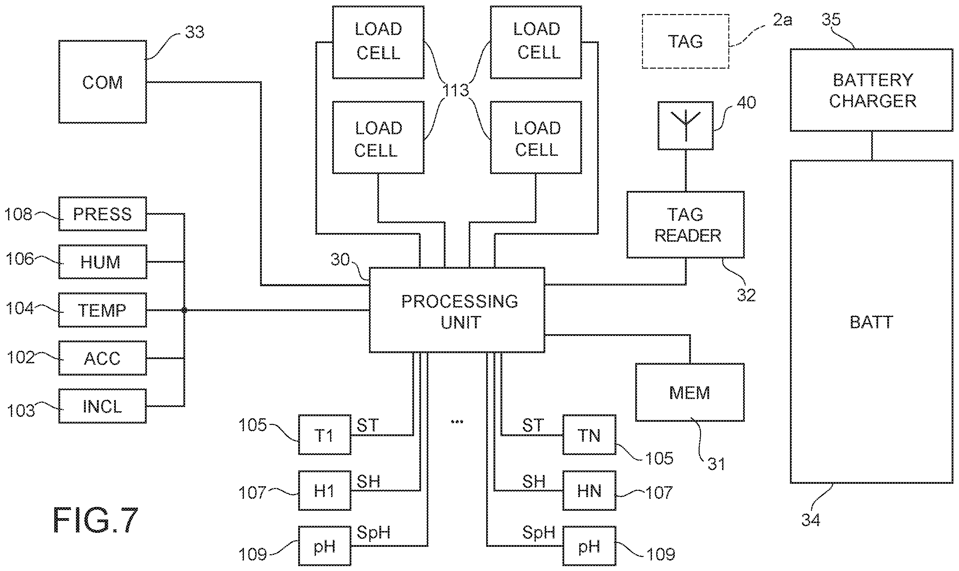

It is further understood that the sensor assembly 100 may also be overturned. In this case, the base plate carries out the function of load plate and vice versa. The number and the arrangement of the load cells 113 may be selected on the basis of the design preferences. In the embodiment of Figures 5-7 there are four load cells 113, for example of piezoelectric type, arranged in the center of respective dials of the weighing device and coupled to the base plate 110 and to the load plate 111. The load cells 113 are communicably coupled to the on-board processing unit 30 for providing load signals SW, indicative of the respective load state of each load cell 113 (Figure 7). The overall surface of the load plate 111 may be substantially equal to the surface of the bottom wall 2b of the container 2 or smaller.

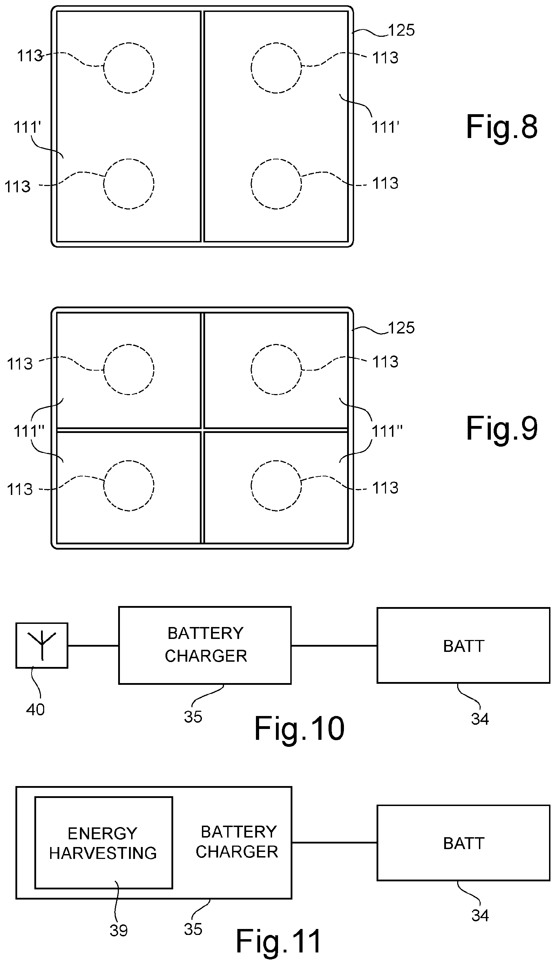

Alternatively, it is possible to use load plates coupled to a set of load cells 113 and arranged adjacent to one another so as to form a single load plane (for example two load plates 110' each coupled to two load cells 113, as in the embodiment of Figure 8 or four load plates 113" coupled to respective load cells 113, Figure 9). Analogously, it is possible to use several base plates instead of the single base plate 110 shown in Figures 6A-6D.

The membrane 125 is shaped so as to define, around the load plate 111, a compensation chamber 127 which is in fluid communication with the sensor chamber 120 through the play between the base plate 110 and the load plate 111. The compensation chamber 127 is a loose pocket in the absence of a load on the load plate 111 and in calibration conditions, for example at 25 °C and 1 atmosphere (Figure 6D). In an embodiment, the membrane 125 is bellows-shaped, with corrugated portions that expand and retract depending on the pressure difference between the inside and the outside of the compensation chamber 127. When a load is applied to the load plate 111 (Figure 6E), for example following the introduction of collected products in the container 2, the lowering of the load plate 111 causes a reduction in the volume of the sensor chamber 120, which is compensated by a corresponding expansion of the compensation chamber 127, for the transfer of fluid through the play between the base plate 110 and the load plate 111. The material forming the membrane 125 and the shape and the maximum volume of the compensation chamber 127 are selected so that the compensation chamber 127 substantially expands without exerting stress, i.e. without counterpressure, at least through a whole available motion range for the load plate 111 relative to the base plate 110 (essentially from a condition of absence of a load on the load plate 111 up to a stop imposed by the maximum compression of the load cells 113). Furthermore, the protective structure 123 is shaped so as not to interfere with the expansion of the compensation chamber 127. The pressure inside the sensor chamber 120 is thus not modified by the variation of volume caused by the load and the weight measurement is not altered. When the load is removed, the compensation chamber 127 returns loose. In this manner, it is possible to ensure the separation between the sensor chamber 125 and the outside, in particular the collection volume of the container 2, without compromising the reliability and the precision of the measurements and preventing on the one hand possible contaminations of the collected products and on the other hand damage to the sensors that could be caused by aggressive substances released by said products. The sensor assembly 100 thus ensures the compatibility with the use in the agri-food sector and with the relative strict regulations.

The compensation chamber 127 expands or shrinks so as not to affect the weight measurements also following external temperature or pressure variations, for example on account of altitude variations. The use of the sensor assembly 100 is thus possible in different environmental conditions without the need for recalibration procedures, which in many circumstances would not even be possible. For example, during the use for the collection in the hills or in the mountains activities are commonly carried out throughout a same day at significantly different altitudes, without having at disposal the means and the conditions for recalibrating the sensor assembly 100.

In the case of Figures 8 and 9, the membrane 125 with the compensation chamber 127 extends along the whole perimeter of the load plane of the weighing device 100 and along perimeter portions of each base plate and/or load plate.

The internal temperature sensor 104, the internal humidity sensor 106 and the pressure sensor 108 provide data and information that may be sent to the processing unit 10 and used for example for monitoring and safety purposes.

In particular, the internal pressure of the sensor chamber 120 measured by the pressure sensor 108 may be used for diagnostic purposes for monitoring the integrity and the correct functioning of the membrane 125. The processing unit 10 compares the pressure inside the sensor chamber 120 with a pressure reference of its own and signals a malfunction if the difference exceeds a planned threshold. In fact, the expansion of the compensation chamber 127 defined by the membrane 125 should ensure the balance between the internal pressure and the external pressure in the normal operating conditions.

The data detected by the internal humidity sensor may be equally used for indicating integrity defects of the membrane. The humidity rate is in fact kept at low levels by hygroscopic salts. A humidity increase, which may be detected by the processing unit 10 when the reading of the internal humidity sensor 106 exceeds a threshold, indicates an imperfect seal condition of the membrane 125 and exposes the electronic components to malfunctions due to oxidation and galvanic effects, reducing the useful life of the sensor assembly 100.

Besides allowing the check of the use within the allowed temperature limits, the internal temperature sensor 104 may be useful in combination with the internal humidity sensor 106 and with the pressure sensor 108 for detecting critical operating conditions. In fact, a temperature increase in the sensor chamber 120 not associated with a corresponding external temperature increase detected by the processing unit 10 is indication of a pressure increase, which should not occur if the compensation chamber extends correctly.

The accelerometer 102 and the inclinometer 103 are also housed inside the sensor chamber 120 and may be for example of microelectromechanical type. The accelerometer 102, in particular, is configured to provide an acceleration signal SA indicative of accelerations at least along an axis perpendicular to the faces 110a, 111a of the base plate 110 and of the load plate 111 and, consequently, perpendicular to the bottom wall 2b of the container 2 when the sensor assembly 100 is fixed thereto (essentially, a vertical axis when the container 2 is arranged flat). In an embodiment, the accelerometer 102 may be multiaxial. In an embodiment, the accelerometer 102 is used by the processing unit 30 as vibration sensor for activating and deactivating a low-consumption standby mode, as is explained below.

The inclinometer 103 is rigidly fixed to the case 21 and provides an inclination signal SI indicative of the inclination of a reference plane and, consequently, of the sensor assembly 100 and of the container 2 with respect to a horizontal plane. The reference plane is parallel to the faces 110a, 111a of the base plate 110 and of the load plate 111. In an embodiment, the function of inclinometer may be implemented starting from the continuous component of the acceleration signal SA provided by the accelerometer 102. The function may be completely integrated in the accelerometer 102, if provided with processing capacity, or implemented by the on-board processing unit 30, which may be configured to extract the continuous component of the acceleration signal SA.

The external temperature sensors 105, the external humidity sensors 107 and the pH-meters 109 are arranged on flexible rods 38, fixed to the weighing device 101 and extending perpendicular to the faces 110a, 111a of the base plate 110 and of the load plate 111 and thus to the bottom wall 2b when the sensor assembly 100 is fixed to the container 2. The number and the placing of the rods 38 and the number and the placing of the external temperature sensors 105, of the humidity sensors 107 and of the pH-meters 109 may be chosen on the basis of the design preferences. In the non-limiting example of Figures 5-7, there are five rods 38, one arranged centrally with respect to the weighing device 101 and the others in positions corresponding to the load cells 113. Each rod 38 carries two external temperature sensors 105, two external humidity sensors 107 and two pH-meters 109. The positions of the sensors 105, 107, 109 on the rods 38 may be selected depending on the type of product to be collected, in addition to the shape and the volume of the container 2, so as to obtain the desired accuracy in the monitoring of the environmental variables. The external temperature sensors 105, the external humidity sensors 107 and the pH-meters 109 respectively provide temperature signals ST, humidity signals SH and pH SpH measurements to the processing unit 30.

The on-board processing unit 30 receives and processes the signals provided by the load cells 113, by the accelerometer 102, by the inclinometer 103, by the external temperature sensors 105, by the external humidity sensors 107 and by the pH-meters 109 and communicates with the outside, in particular with the ground processing unit 10 through the communication module 33, as is more specifically disclosed in the following. The communication module 33 is configured for the connection with an access point to a data network (for example, the wireless communication module 12) and in an embodiment it is a BLE (Bluetooth Low Energy) modem or based on other LPRF (Low Power Radio-Frequency) technologies, advantageously allowing restraining the energy consumption. In other embodiments not shown, the communication module may be chosen also on the basis of other parameters, such as the sending distance, the data flow, the latency, the sturdiness to disturbances, according to design preferences.

The identification tag reader 32 has a winding 40 placed in a position corresponding to the identification tag 2a of the container 2, so as to be communicably coupled wirelessly. The identification tag reader 32 may be an RFID or NFC reader, in accordance with the type of identification tag 2a used.

In the described embodiment, the battery 34 is of rechargeable type and provides power supply to all the users on board the sensor assembly 100.

The recharging device 35 recharges the battery 34. In the embodiment of Figure 10, the recharging device 34 is of inductive type and uses the same winding 40 of the identification tag reader 32. Alternatively, the recharging device 35 may comprise an energy harvesting device 39 from the environment (Figure 11) and may use as energy source the movement (being the container 2 subjected to continuous loading and unloading operations, it is advantageous to exploit part of this work for harvesting energy through piezoelectric effect) or temperature differences. The recharging device may also be provided with a connector (not shown, for example a USB connector) for the connection to an external supply source, such as an electric network.

As mentioned, the on-board processing unit 30 receives and processes the signals provided by the load cells 113, by the accelerometer 102, by the inclinometer 103, by the external temperature sensors 105, by the external humidity sensors 107 and by the pH-meters 109. In particular, the processing unit 30 stores temporal series of the load signals SW, of the acceleration signal SA, of the inclination signal SI, of the temperature signals ST and of the humidity signals SH in the storage module 31 and performs the following operations:
activates and deactivates a low-consumption standby mode depending on the acceleration signal SA provided by the accelerometer 102;
determines a weight measured value W of the product in the container 2 starting from the load signals SW provided by the load cells 113, from the acceleration signal SA provided by the accelerometer 102 and from the inclination signal SI provided by the inclinometer 103;
stores, at least temporarily, temporal series of the detected weight, of the acceleration signal SA, of the inclination signal SI, of the temperature signals ST and of the humidity signals SH;
communicates with external devices through the communication module 33, in particular with one or more ground processing units 10 or with a remote server.

Furthermore, in an initialization step after the sensor assembly 100 has been coupled to the container 2, the processing unit 30, through the identification tag reader 32, reads the identification tag 2a of the container 2 and associates it with an identification code of its own stored in the storage module 31 (in use, the identification tag 2a is in the field of action of the identification tag reader 32) . The association allows, in an equipment for traceability of agri-food products, matching the container 2 and the signals collected by the sensor assembly 100. The processing unit 30 may recover from the identification tag 2a data relative to the constructive characteristics of the container 2, such as internal dimensions (bottom wall 2b and depth), maximum load, shape factor, material and other information required by the general management system, such as for example, type of use, name of the owning company, etc...). The initialization may thus be carried out in a completely automatic manner. Alternatively, the processing unit 30 may be initialized by an operator through a communication interface (not shown) that exploits the communication module 33. The operator may make the association of the identification code of the sensor assembly 100 and of the identification tag 2a of the container 2 and, possibly, load the data relative to the characteristics of the container manually or from a database for example resident on the remote server.

The processing unit 30 uses the acceleration signal SA provided by the accelerometer 102 for activating and deactivating the standby mode. Essentially, the accelerometer 102 is used as a vibration sensor for determining the presence or the absence of activity in relation to the container 2. More precisely, if the acceleration signal SA remains substantially null, or anyway below a threshold, for a period of time exceeding a control interval, and in the absence of other signals, the processing unit 30 activates the standby mode because the absence of vibrations indicates that there are no significant activities underway. When the activity resumes, for example for a load, the produced vibrations are immediately detected by the accelerometer 102 and the processing unit 30 deactivates the standby mode, so that the loss of information may be prevented during the recording of the weight signals SW.

With regard to the calculation of the weight measured value W, the processing unit 30 uses a first calculation mode or a second calculation mode on the basis of the acceleration signal SA provided by the accelerometer 102. The first calculation mode is used ordinarily, whereas the second calculation mode is used following movements, shakes or knocks of the container 2 detected by the accelerometer 102.

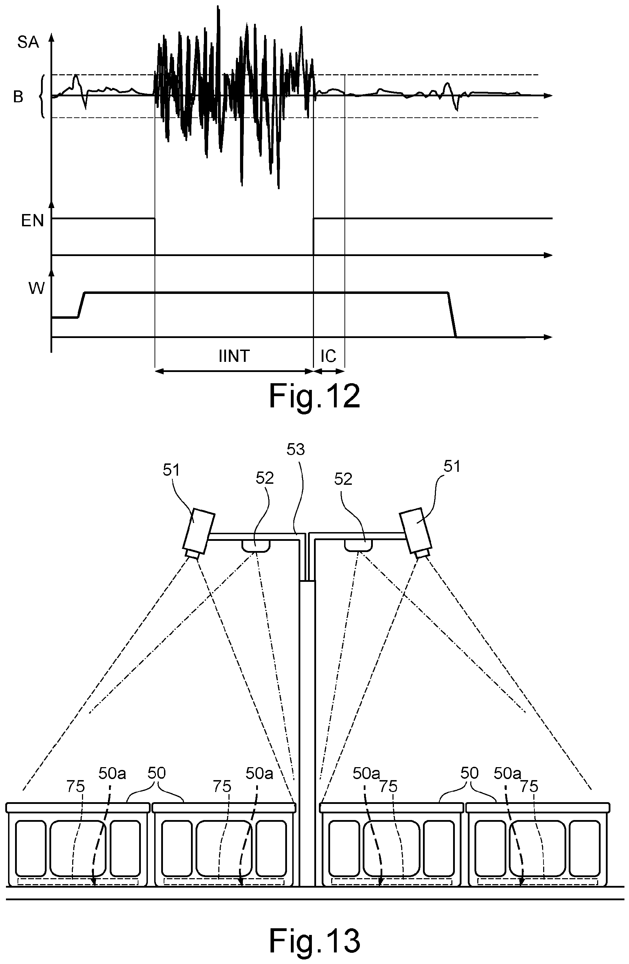

When the acceleration signal SA remains within a control amplitude band B, as shown in Figure 12, the processing unit 30 sets an enable signal EN at a first logic value, for example a high logic value, that allows determining and updating the weight measured value W of the product inside the container 2 according to the first calculation mode on the basis of current values of the load signals SW and of the inclination signal SI.

The processing unit 30 combines the data received through the load signals SW, corrected keeping into account the inclination signal SI from the inclinometer 103 so as to compensate the effect of the inclination of the ground on which the container 2 is situated. The combination of the load signals SW is carried out with procedures that may depend on the arrangement of the load cells 113 and on the coupling to the load plates 111. In the example of Figure 5, the data extracted from the load signals SW for each load cell 113 may be independently compensated for the inclination and thus simply added up for obtaining the overall weight. If the surface of the load plate 111 is smaller than the surface of the bottom wall 2b of the container 2, the processing unit 30 determines the estimate of the weight by using a correction factor, for keeping into account the fact that the weight measured directly is a fraction of the overall weight of the product in the container 2. The correction factor may be obtained from the initialization data taken from the identification tag 2a (in particular from the data relative to the geometrical characteristics) or manually inserted by the authorized operator. In an embodiment, the weight measured value W may be determined also keeping into account the humidity rate indicated by the humidity signals SH provided by the external humidity sensors 107. Generally, the processing unit 30 may execute statistic processing of all the signals received from the sensors (among which, not limitedly, mean value, standard deviation, medians, minimum-maximum, variable time windows, gradients, filters, spectral analyses, of Fourier) with the aim to determine the weight measured value W and possibly further useful values, such as the filling, transportation and unloading time of the containers 2. In an embodiment, the processing unit 30 associates the stored signals, the measured weight and the information obtained with respective degrees of confidence, precision and tolerances.

When the acceleration signal SA remains outside of the control amplitude band B for a time exceeding a planned latency interval, the processing unit 30 sets the enable signal EN at a second logic value, for example a low logic value, and determines the weight measured value W on the basis of the second calculation mode. The interval of time in which the acceleration signal SA exceeds the control amplitude band B will be indicated in the following as interdiction interval IINT.

In the second calculation mode, the processing unit 30 determines the measured value W starting from the values of the acceleration signal SA and of the inclination signal SI at least in part temporally not corresponding to the interdiction interval IINT and on the basis of a planned criterion. In an embodiment, for example, the measured value W in the interdiction interval IINT is set equal to a mean of the measured value W on control interval IC immediately following the interdiction interval IINT. Alternatively, the measured value W in the interdiction interval IINT may be set equal to the measured value W immediately prior to the interdiction value IINT (essentially, the measured value W is "frozen" during the interdiction interval IINT) or it may be obtained from a low-pass filtering of the load signals SW. In this manner, spurious contributions in the load signals SW that may be linked to the shifting and to the transportation of the container 2, for example between different collection sites or between a collection site and a storage or transformation plant, are eliminated. Nonetheless, possible actual weight variations occurred when the weight detection is disabled may be subsequently corrected, when the acceleration signal SA returns within the control amplitude band B.

As mentioned in the foregoing, the processing unit 30 stores temporal series of the load signals SW, of the acceleration signals SA, of the inclination signal SI, of the temperature signals ST and of the humidity signals SH in the storage module 31. Optionally, also a temporal series of the values of the measured weight W may be stored in the storage module 31. All the signals and the information stored by the processing unit 30 are associated with temporal markers. In this manner, besides keeping a history of the detections accessible upon request, it is possible to optimize the sending of data, for the total benefit of the autonomy of the sensor assembly 100. With respect to the monitoring and collection activities of the measurement signals, in fact, the sending of data is extremely costly in terms of energy. Storing the temporal series of the signals in the storage module 31 allows preventing the waste of energy for establishing a connection in the absence of data to be sent or for long-distance sending. For example, the data stored in the storage module 31 may be forwarded to the processing unit 10 on the frame 3 through a short-range and low-power connection.

The stored data may be downloaded in a second moment, when the network connection becomes again available. Furthermore, also thanks to the temporal markers, the collected data may be processed for example at a remote server and correlated with further information, such as the images detected by the image sensor 14 or the coordinates detected by the satellite localization device 8. The correlation of information allows, in turn, improving the tracing of the products, reducing the margin for fraud attempts.

The sensor assembly according to the invention advantageously allows monitoring the variations of fundamental parameters for traceability of agri-food products, reducing the margins for fraud attempts and making available accurate and continuously updated information on the state of preservation. Firstly, the continuous monitoring of the weight, associated with the detection of the accelerations, allows correctly identifying the events that correspond to actual variations of the weight of the product collected in the container. The possibility of communicating in low-consumption wireless mode, besides making available sufficient autonomy for the continuative use over long periods, allows immediately integrating the data detected by the sensor assembly with the images acquired by the image sensors and geolocation data.

The measurement of the temperature and humidity data allows monitoring the preservation conditions both during the period of the collection and the transportation, and during the storage prior to the processing. The exposure to excessive temperatures, with potentially damaging changes and to inadequate humidity levels may be thus documented for each container. The use of flexible rods allows positioning the temperature and humidity sensors in the manner deemed the most suitable, according to the type of container used and of the collected product.

The reversible fixing of the sensor assembly to the container offers further advantages in terms of cost, of flexibility of use and of maintenance. In this manner, in fact, it is not necessary for the sensor assembly to be integrated in the containers, which, outside of the period of collection, could be used for other purposes that do not require a constant monitoring of significant parameters. Furthermore, an event relatively such as the breaking of a container does not oblige to replace the whole sensor assembly. Also the transportation for the maintenance or the recharging of the batteries is simpler.

The sensor assembly has been described up to here in connection with the use in containers defined by stackable crates. It is however understood that the use of the sensor assembly according to the invention may be extended to any container for the collection of agri-food products. In particular, the sensor assembly may be used, possibly suited in the dimensions, with containers that are standard bins of the type indicated by 50 in Figure 13. Each container 50 is provided with a respective sensor assembly 75 substantially as already described, reversibly fixed to a bottom wall 50a inside the container 50. Compared to the sensor assembly 100, the sensor assembly 75 may be distinguished for example for:
the number and arrangement of the load cells;
the number, the dimensions and the arrangement of the load plates associated with the load cells;
the number and the arrangement of the temperature and humidity sensors, both with respect to the plane of the case of the sensor assembly, and in height;
the type of battery and of recharging device used.

In this case, the image detecting device and the movement sensor, respectively indicated by 51 and 52 in Figure 13, may be mounted on a fixed structure 53, adjacent the place where the containers 50 are arranged (for example on the load plane of a means of transportation or of a trailer or on the ground in a storehouse of a processing plant). The image detecting device 51 and the movement sensors 52 may each be associated also with several containers 50.

Finally, it is evident that modifications and variants may be made to the described and claimed sensor assembly without thereby departing from the scope of protection defined in the appended claims.

## Claims

1. A sensor assembly for an equipment for aiding traceability of agri-food products comprising:
a first plate (110);
a second plate (111; 111'; 111"), facing the first plate (110) ;
a first chamber (120) defined between the first plate (110) and the second plate (111; 111'; 111");
at least a load cell (113), housed in the first chamber (120) and coupled to the first plate (110) and to the second plate (111; 111'; 111") so as to be responsive to a load applied on the second plate (111; 111'; 111");
**characterized by** a membrane (125) fluid-tight coupled to the first plate (110) and to the second plate (111; 111'; 111") along a perimeter thereof and delimiting a sealed closed space containing the first chamber (120);
wherein the membrane (125) forms a second chamber (127) fluidly communicating with the first chamber (120) and defined by a pocket which is expandable without counterpressure and retractable in response to a pressure difference between an inside and an outside of the second chamber (127).

2. The sensor assembly according to claim 1, wherein the second chamber (127) is loose in the absence of a load on the second plate (111; 111'; 111") and expands without counterpressure in response to a movement of the second plate (111; 111'; 111") toward the first plate (110) on account of an applied load.

3. The sensor assembly according to claim 1 or 2, wherein the membrane (125) is bellows-shaped.

4. The sensor assembly according to any one of the preceding claims, wherein a material forming the membrane (125), shape and maximum volume of the second chamber (127) are selected so that the second chamber (127) expands without counterpressure at least through a whole available motion range for the second plate (111) relative to the first plate (110) .

5. The sensor assembly according to any one of the preceding claims, wherein the first plate (110) has a first perimetral frame (110b) projecting toward the second plate (111; 111'; 111") and the second plate (111; 111'; 111") has a second perimetral frame (111b) projecting toward the first plate (110) and wherein the first plate (110) has such dimensions as to receive the second plate (110) slidably and with play inside a recess defined by the first perimetral frame (110b).

6. The sensor assembly according to claim 5, wherein the second chamber (127) is in fluid communication with the first chamber (120) through the play between the first plate (110) and the second plate (111; 111'; 111").

7. The sensor assembly according to claim 5 or 6, wherein the membrane (125) is joined to the second perimetral frame (111b) of the second plate (111; 111'; 111") and is sealingly fixed to the first perimetral frame (110b) of the first plate (110) by a fixing frame (121).

8. The sensor assembly according to any one of the preceding claims, wherein the second chamber (127) extends along a whole perimeter of the second plate (111; 111'; 111") .

9. The sensor assembly according to any one of the preceding claims, wherein the first plate (110) has a flat first face (110a) and the second plate (111; 111'; 111") has a flat second face (111a) parallel to the first face (110a) and wherein the second plate (111; 111'; 111") is constrained to slide relative to the first plate (110) exclusively in a direction perpendicular to the first face (110a) and to the second face (111a).

10. The sensor assembly according to any one of the preceding claims, comprising a protective structure (123) arranged to cover at least in part the second chamber (127).

11. The sensor assembly according to any one of the preceding claims, comprising a plurality of second plates (111'; 111") each coupled to at least one respective load cell (113) and arranged adjacent to one another so as to form a single load plane.

12. The sensor assembly according to any one of the preceding claims, comprising an on-board processing unit (30) and an on-board communication module (33) housed inside the first chamber (120) and an external processing unit (10) and an external communication module (12), wherein the on-board communication module (33) and the external communication module (12) are mutually communicably coupled through a wireless connection, wherein the on-board processing unit (30) is configured to send measurement data of the load cells (113) to the external processing unit (10) through the on-board communication module (33) and the external communication module (12) and wherein the external processing unit (10) is configured to determine an overall load on the second plate (111) on the basis of the measurement data of the load cells (113).

13. The sensor assembly according to claim 12, comprising an accelerometer (102) and an inclinometer (103) housed inside the first chamber (120), wherein the on-board processing unit (30) is configured to send measurement data of the accelerometer (102) and of the inclinometer (103) to the external processing unit (10) through the on-board communication module (33) and the external communication module (12) and wherein the external processing unit (10) is configured to determine the overall load on the second plate (111) on the basis of the measurement data of the accelerometer (102) and of the inclinometer (103).

14. The sensor assembly according to claim 12 or 13, comprising a plurality of environmental sensors (104, 106, 108) housed inside the first chamber (120), wherein the on-board processing unit (30) is configured to send measurement data of the environmental sensors (104, 106, 108) to the external processing unit (10) through the on-board communication module (33) and the external communication module (12) and wherein the external processing unit (10) is configured to carry out diagnostic functions on the basis of the measurement data of the environmental sensors (104, 106, 108) .

15. A tool for aiding traceability of agri-food products comprising a container (2; 50) and a sensor assembly (100) according to any one of the preceding claims arranged inside the container (2) and reversibly fixed to a bottom wall (2b; 50a) of the container (2; 50).

## Patentansprüche

1. Sensorbaugruppe für eine Vorrichtung zur Unterstützung der Rückverfolgbarkeit von Agrar- und Lebensmittelprodukten, umfassend: eine erste Platte (110); eine zweite Platte (111; 111'; 111"), die der ersten Platte (110) zugewandt ist; eine erste Kammer (120), die zwischen der ersten Platte (110) und der zweiten Platte (111; 111'; 111") definiert ist; mindestens eine Kraftmesszelle (113), die in der ersten Kammer (120) untergebracht und mit der ersten Platte (110) und der zweiten Platte (111; 111'; 111") verbunden ist, so dass sie auf eine auf die zweite Platte (111; 111'; 111") ausgeübte Last reagiert; **gekennzeichnet durch** eine Membran (125), die flüssigkeitsdicht mit der ersten Platte (110) und der zweiten Platte (111; 111'; 111") entlang eines Umfangs davon verbunden ist und einen abgedichteten geschlossenen Raum begrenzt, der die erste Kammer (120) enthält; wobei die Membran (125) eine zweite Kammer (127) bildet, die in Fluidverbindung mit der ersten Kammer (120) steht und durch eine Tasche definiert ist, die ohne Gegendruck ausdehnbar und in Reaktion auf eine Druckdifferenz zwischen einer Innenseite und einer Außenseite der zweiten Kammer (127) einklappbar ist.

2. Die Sensorbaugruppe nach Anspruch 1, wobei die zweite Kammer (127) bei fehlender Belastung der zweiten Platte (111; 111'; 111") lose ist und sich ohne Gegendruck als Reaktion auf eine Bewegung der zweiten Platte (111; 111'; 111") in Richtung der ersten Platte (110) aufgrund einer aufgebrachten Last ausdehnt.

3. Die Sensorbaugruppe nach Anspruch 1 oder 2, wobei die Membran (125) balgförmig ist.

4. Die Sensorbaugruppe gemäß einem der vorstehenden Ansprüche, wobei ein Material, das die Membran (125) bildet, die Form und das maximale Volumen der zweiten Kammer (127) so gewählt sind, dass sich die zweite Kammer (127) ohne Gegendruck mindestens über den gesamten verfügbaren Bewegungsbereich für die zweite Platte (111) relativ zur ersten Platte (110) ausdehnt.

5. Die Sensorbaugruppe gemäß einem der vorhergehenden Ansprüche, wobei die erste Platte (110) einen ersten Umfangsrahmen (110b) aufweist, der in Richtung der zweiten Platte (111; 111'; 111") vorsteht, und die zweite Platte (111; 111'; 111") einen zweiten Umfangsrahmen (111b) aufweist, der in Richtung der ersten Platte (110) vorsteht, und wobei die erste Platte (110) solche Abmessungen aufweist, dass sie die zweite Platte (110) verschiebbar und mit Spiel in einer durch den ersten Umfangsrahmen (110b) definierten Aussparung aufnimmt.

6. Die Sensorbaugruppe nach Anspruch 5, wobei die zweite Kammer (127) durch das Spiel zwischen der ersten Platte (110) und der zweiten Platte (111; 111'; 111") in Fluidverbindung mit der ersten Kammer (120) steht.

7. Die Sensorbaugruppe nach Anspruch 5 oder 6, wobei die Membran (125) mit dem zweiten Umfangsrahmen (111b) der zweiten Platte (111; 111'; 111") verbunden ist und durch einen Befestigungsrahmen (121) dichtend am ersten Umfangsrahmen (110b) der ersten Platte (110) befestigt ist.

8. Die Sensorbaugruppe nach einem der vorhergehenden Ansprüche, wobei sich die zweite Kammer (127) entlang des gesamten Umfangs der zweiten Platte (111; 111'; 111") erstreckt.

9. Die Sensorbaugruppe nach einem der vorhergehenden Ansprüche, wobei die erste Platte (110) eine flache erste Fläche (110a) aufweist und die zweite Platte (111; 111; 111") eine flache zweite Fläche (111a) aufweist, die parallel zur ersten Fläche (110a) verläuft, und wobei die zweite Platte (111; 111; 111") so eingeschränkt ist, dass sie relativ zur ersten Platte (110) ausschließlich in einer Richtung senkrecht zur ersten Fläche (110a) und zur zweiten Fläche (111a) gleiten kann.

10. Die Sensorbaugruppe gemäß einem der vorstehenden Ansprüche umfasst eine Schutzstruktur (123), die so angeordnet ist, dass sie zumindest teilweise die zweite Kammer (127) abdeckt.

11. Die Sensorbaugruppe gemäß einem der vorstehenden Ansprüche, umfassend eine Vielzahl von zweiten Platten (111'; 111"), die jeweils mit mindestens einer entsprechenden Kraftmesszelle (113) verbunden sind und so nebeneinander angeordnet sind, dass sie eine einzige Lastebene bilden.

12. Die Sensorbaugruppe gemäß einem der vorstehenden Ansprüche, umfassend eine on-board Verarbeitungseinheit (30) und ein on-board Kommunikationsmodul (33), die in der ersten Kammer (120) untergebracht sind, und eine externe Verarbeitungseinheit (10) und ein externes Kommunikationsmodul (12), wobei das on-board Kommunikationsmodul (33) und das externe Kommunikationsmodul (12) über eine drahtlose Verbindung miteinander verbunden sind, wobei die on-board Verarbeitungseinheit (30) so konfiguriert ist, dass sie Messdaten der Kraftmesszellen (113) über das on-board Kommunikationsmodul (33) und das externe Kommunikationsmodul (12) an die externe Verarbeitungseinheit (10) sendet, und wobei die externe Verarbeitungseinheit (10) so konfiguriert ist, dass sie eine Gesamtlast auf der zweiten Platte (111) auf der Grundlage der Messdaten der Kraftmesszellen (113) bestimmt.

13. Sensorbaugruppe nach Anspruch 12, umfassend einen Beschleunigungsmesser (102) und einen Neigungsmesser (103), die in der ersten Kammer (120) untergebracht sind, wobei die on-board Verarbeitungseinheit (30) dazu konfiguriert ist, Messdaten des Beschleunigungsmessers (102) und des Neigungsmessers (103) über das on-board Kommunikationsmodul (33) und das externe Kommunikationsmodul (12) an die externe Verarbeitungseinheit (10) zu senden, und wobei die externe Verarbeitungseinheit (10) dazu konfiguriert ist, die Gesamtbelastung auf der zweiten Platte (111) auf der Grundlage der Messdaten des Beschleunigungsmessers (102) und des Neigungsmessers (103) zu bestimmen.

14. Sensorbaugruppe nach Anspruch 12 oder 13, umfassend eine Vielzahl von Umgebungssensoren (104, 106, 108), die in der ersten Kammer (120) untergebracht sind, wobei die on-board Verarbeitungseinheit (30) dazu konfiguriert ist, Messdaten der Umgebungssensoren (104, 106, 108) über das on-board Kommunikationsmodul (33) und das externe Kommunikationsmodul (12) an die externe Verarbeitungseinheit (10) zu senden, und wobei die externe Verarbeitungseinheit (10) dazu konfiguriert ist, auf der Grundlage der Messdaten der Umgebungssensoren (104, 106, 108) Diagnosefunktionen auszuführen.

15. Mittel zur Unterstützung der Rückverfolgbarkeit von Agrarlebensmitteln umfassend einen Behälter (2; 50) und eine Sensorbaugruppe (100) gemäß einem der vorhergehenden Ansprüche, die innerhalb des Behälters (2) angeordnet und reversibel an einer Bodenwand (2b; 50a) des Behälters (2; 50) befestigt ist.

## Revendications

1. Ensemble de capteurs pour un équipement d'aide à la traçabilité de produits agro-alimentaires comprenant :
une première plaque (110) ;
une seconde plaque (111 ; 111' ; 111"), faisant face à la première plaque (110) ;
une première chambre (120) définie entre la première plaque (110) et la seconde plaque (111 ; 111' ; 111") ;
au moins une cellule de pesage (113), logée dans la première chambre (120) et couplée à la première plaque (110) et à la seconde plaque (111 ; 111' ; 111") de façon à être sensible à une charge appliquée sur la seconde plaque (111 ; 111' ; 111") ;
**caractérisé par** une membrane (125) couplée de manière étanche aux fluides à la première plaque (110) et à la seconde plaque (111 ; 111' ; 111") le long d'un périmètre de celle-ci et délimitant un espace fermé scellé contenant la première chambre (120) ;
dans lequel la membrane (125) forme une seconde chambre (127) communiquant de manière fluidique avec la première chambre (120) et définie par une poche qui est dilatable sans contre-pression et rétractable en réponse à une différence de pression entre un intérieur et un extérieur de la seconde chambre (127) .

2. Ensemble de capteurs selon la revendication 1, dans lequel la seconde chambre (127) est lâche en l'absence d'une charge sur la seconde plaque (111 ; 111' ; 111'') et se dilate sans contre-pression en réponse à un mouvement de la seconde plaque (111 ; 111' ; 111'') vers la première plaque (110) en raison d'une charge appliquée.

3. Ensemble de capteurs selon la revendication 1 ou 2, dans lequel la membrane (125) est en forme de soufflet.

4. Ensemble de capteurs selon l'une quelconque des revendications précédentes, dans lequel un matériau formant la membrane (125), la forme et le volume maximal de la seconde chambre (127) sont sélectionnés de sorte que la seconde chambre (127) se dilate sans contre-pression au moins sur toute une plage de mouvement disponible pour la seconde plaque (111) par rapport à la première plaque (110).

5. Ensemble de capteurs selon l'une quelconque des revendications précédentes, dans lequel la première plaque (110) possède un premier cadre périmétrique (110b) faisant saillie vers la seconde plaque (111 ; 111' ; 111") et la seconde plaque (111 ; 111' ; 111'') possède un second cadre périmétrique (111b) faisant saillie vers la première plaque (110) et dans lequel la première plaque (110) possède des dimensions telles qu'elle reçoit la seconde plaque (110) de manière coulissante et avec un jeu à l'intérieur d'un évidement défini par le premier cadre périmétrique (110b).

6. Ensemble de capteurs selon la revendication 5, dans lequel la seconde chambre (127) est en communication fluidique avec la première chambre (120) par le biais du jeu entre la première plaque (110) et la seconde plaque (111 ; 111' ; 111'').

7. Ensemble de capteurs selon la revendication 5 ou 6, dans lequel la membrane (125) est jointe au second cadre périmétrique (111b) de la seconde plaque (111 ; 111' ; 111'') et est fixée de manière étanche au premier cadre périmétrique (110b) de la première plaque (110) par un cadre de fixation (121).

8. Ensemble de capteurs selon l'une quelconque des revendications précédentes, dans lequel la seconde chambre (127) s'étend le long de tout un périmètre de la seconde plaque (111 ; 111' ; 111").

9. Ensemble de capteurs selon l'une quelconque des revendications précédentes, dans lequel la première plaque (110) possède une première face (110a) plate et la seconde plaque (111 ; 111' ; 111") possède une seconde face (111a) plate parallèle à la première face (110a) et dans lequel la seconde plaque (111 ; 111' ; 111") est contrainte de coulisser par rapport à la première plaque (110) exclusivement dans une direction perpendiculaire à la première face (110a) et à la seconde face (111a).

10. Ensemble de capteurs selon l'une quelconque des revendications précédentes, comprenant une structure de protection (123) agencée pour recouvrir au moins en partie la seconde chambre (127).

11. Ensemble de capteurs selon l'une quelconque des revendications précédentes, comprenant une pluralité de secondes plaques (111' ; 111''), couplées chacune à au moins une cellule de pesage (113) respective et agencées de manière adjacente les unes aux autres de façon à former un unique plan de pesage.

12. Ensemble de capteurs selon l'une quelconque des revendications précédentes, comprenant une unité de traitement embarquée (30) et un module de communication embarqué (33) logés à l'intérieur de la première chambre (120) et une unité de traitement externe (10) et un module de communication externe (12), dans lequel le module de communication embarqué (33) et le module de communication externe (12) sont mutuellement couplés en communication par le biais d'une connexion sans fil, dans lequel l'unité de traitement embarquée (30) est configurée pour envoyer des données de mesure des cellules de pesage (113) à l'unité de traitement externe (10) par le biais du module de communication embarqué (33) et du module de communication externe (12) et dans lequel l'unité de traitement externe (10) est configurée pour déterminer une charge globale sur la seconde plaque (111) sur la base des données de mesure des cellules de pesage (113).

13. Ensemble de capteurs selon la revendication 12, comprenant un accéléromètre (102) et un inclinomètre (103) logés à l'intérieur de la première chambre (120), dans lequel l'unité de traitement embarquée (30) est configurée pour envoyer des données de mesure de l'accéléromètre (102) et de l'inclinomètre (103) à l'unité de traitement externe (10) par le biais du module de communication embarqué (33) et du module de communication externe (12) et dans lequel l'unité de traitement externe (10) est configurée pour déterminer la charge globale sur la seconde plaque (111) sur la base des données de mesure de l'accéléromètre (102) et de l'inclinomètre (103) .

14. Ensemble de capteurs selon la revendication 12 ou 13, comprenant une pluralité de capteurs environnementaux (104, 106, 108) logés à l'intérieur de la première chambre (120), dans lequel l'unité de traitement embarquée (30) est configurée pour envoyer des données de mesure des capteurs environnementaux (104, 106, 108) à l'unité de traitement externe (10) par le biais du module de communication embarqué (33) et du module de communication externe (12) et dans lequel l'unité de traitement externe (10) est configurée pour mettre en œuvre des fonctions de diagnostic sur la base des données de mesure des capteurs environnementaux (104, 106, 108).

15. Outil d'aide à la traçabilité de produits agro-alimentaires comprenant un contenant (2 ; 50) et un ensemble de capteurs (100) selon l'une quelconque des revendications précédentes agencé à l'intérieur du contenant (2) et fixé de manière réversible à une paroi de fond (2b ; 50a) du contenant (2 ; 50).
